# EUROPEAN PATENT SPECIFICATION

(11) **EP 1 446 240 B1**
(45) Date of publication and mention of the grant of the patent: **21.02.2007**
(21) Application number: 02779570.7
(22) Date of filing: 22.11.2002
(51) Int. Cl.: B09C 1/10, B09C 1/00

(54) **PROCESS FOR THE REMEDIATION OF POLLUTED SITES**
VERFAHREN ZUR SANIERUNG KONTAMINIERTER STANDORTE
PROCEDE D'ASSAINISSEMENT DE SITES POLLUES

(30) Priority: 23.11.2001 IT MI20012469
(43) Date of publication of application: 18.08.2004
(73) Proprietor: ENI S.p.A., 00144 Roma (IT)
(72) Inventor: FABIANI, Fabio, I-00018 Palombara Sabina (IT); DAVINI, Enrico, I-00015 Monterotondo (IT); MOLINARI, Mauro, I-16155 Genova-Pegli (IT)
(74) Representative: De Gregori, Antonella
(86) International application number: PCT/EP2002/013147
(87) International publication number: WO 2003/043755

(56) References cited:
- WO-A-00/33070
- WO-A-98/21152
- US-A- 4 087 356
- US-A- 5 985 149
- US-A- 6 109 358

## Description

The present invention relates to a process for the remediation of polluted sites.

More specifically, the present invention relates to a process for the remediation of soil, ground and underground water polluted by compounds of an organic nature.

Even more specifically, the present invention relates to a process for the remediation of soil, ground and underground water polluted by petroleum distillates such as, for example, gasolines and gas oils, or other biodegradable products with or without a hydrocarbon structure.

Processes for the remediation of polluted soil are known in literature. In the USA patent 6,109,358, for example, a bioremediation process is described for soil polluted by hydrocarbon residues, which includes continuously aerating the soil at different depths, even below the ground water level, by means of venting heads connected to a reservoir under pressure. The conditions are thus established for favouring the rapid growth of aerobic bacterial flora which will carry out the degradation of the pollutants.

In order to avoid the drawback of resorting to the use of conventional internal combustion or electric engines for running the compressors, the method of the US patent, envisages the use of the motive power generated by windmills, consisting of one or more windmills connected to the compression-air system. Thanks to this solution, it has been possible to eliminate, or reduce, the disadvantages associated with traditional engines, such as maintenance and/or refueling, which require the often frequent interventions of operators and technical personnel.

The problem of managing a remediation or bioremediation method of polluted sites in a fully automatic way, in the absence of dedicated personnel, is not in fact resolved by the above-mentioned method of the US patent, as the biodegradation of pollutants requires, in addition to soil ventilation, also the presence of nutrients based on phosphorous and nitrogen, necessary for the development and growth of the aerobic bacterial flora:

The concentration of the nutrients must be sufficiently high to diminish the demolition times of the polluting molecules and, at the same time, sufficiently low to avoid eutrophication processes of the underground water. The nutrients, usually selected from normal fertilizers for agriculture, must therefore be gradually and periodically added to the soil with the intervention of operators, whose presence consequently re-proposes the drawbacks overcome by the use of windmills.

The operating costs of a bioremediation site are also highly influenced by the necessity of:
- controlling the humidity of the vadose zone of the soil, which tends, particularly during the period of scarce rain and in the superficial layers of the soil, to be reduced to below the critical threshold for degradation on the part of the micro-organisms;
- providing periodical soil and underground water samplings for monitoring the satisfactory progress of the remediation which, in the case of bioremediation interventions (in situ), can last from 6 months to over three years.

The Applicants have now found a fully automatic method for drastically reducing the operating costs of the bioremediation of a polluted site, by excluding, or highly reducing, the presence of personnel for the maintenance of the machinery used, controlling the nutrients and humidity level, necessary for a correct biodegradation process, and for periodical verifications. We have therefore found:
- a salt based on phosphorous and nitrogen which, due to its poor solubility in water, very slowly releases its nutrient constituents for bacterial flora, thus enabling it to be accumulated and distributed in the soil in relatively high amounts, without running the risk of polluting the underlying water table and without requiring continuous dosage interventions on the part of external operators;
- an air dosage and distribution system, based on the exploitation of wind energy, capable of making oxygen available in a quantity suitable for acting as a final electron-acceptor for microbiologic oxidation processes of the pollutants;
- an integrated system of sensors capable of issuing signals to a data collection and processing system for the activation/deactivation of the introduction of air into the soil to be reclaimed, the modulation of the air-flow between the different injection points, the activation/deactivation of the irrigation systems of the vadose zone of the site and for monitoring the biodegradation phenomena of the pollutants.

An objective of the present invention therefore relates to a process for site remediation, such as soil, ground and underground water polluted by biodegradable organic products which comprises:
a) insertion in the site of a series of venting heads at different depths;
b) connection of the venting heads to a reservoir containing air under pressure, fed by a compressor driven by a windmill;
c) distribution of magnesium ammonium phosphate NH₄MgPO₄ in the site, in a single operation, at the beginning of the treatment, in such a quantity as to guarantee the availability of the amount of nitrogen and phosphorous necessary for the biodegradation process;
d) installation on site of a series of sensors for monitoring the progress of the biodegradation and for controlling the availability of oxygen and humidity;
e) connecting the sensors of step d) to data loggers, which, when periodically checked, transmit the acquired data to a collecting and data processing remote station;
f) regulating the flow-rate of the process fluids and the operating times of the equipment by means of actuators operated from the remote station.

According to the present invention, the remediation process can be used both in the case of treatment in situ, such as biosparging or bioventing, and in the case of on-site and ex situ treatment, such as bio-cells and land-farming.

In the case of in situ treatment, the venting heads can be placed above or inside the water table, whereas in the case of on-site and ex situ treatment, they will be situated inside the matrix to be reclaimed. Said heads usually consist of cylindrical, plastic or metallic structures, for example of PVC or stainless steel, wherein at least the terminal part, or the whole interred part, has several holes which allow the compressed air to flow into the soil or to gurgle into the water table. The connections between the venting heads, the air reservoir, the compressor and windmill are of the conventional type and do not require any special equipment.

The windmill comprises an impeller and mechanisms suitable for transferring the mechanical energy generated by the rotation of the impeller due to the wind, to a shaft connected to the air compressor.

With a diameter of the impeller ranging from 5 to 7 metres and a wind velocity ranging from 3 to 6 m/sec, an installed power of 0.5 to 3 kW is generally obtained. If a power higher than 3 kW is necessary, impellers with a higher diameter than those indicated, or an appropriate number of windmills operating in parallel, can be used.

Magnesium ammonium phosphate is a product which is known in scientific literature and can be prepared, for example, by recovering the salt precipitated by mixing in suitable proportions solutions containing ammonium phosphate and magnesium chloride at a pH close to neutrality or slightly alkaline.

In the case of in situ treatment, the magnesium ammonium phosphate can be distributed onto the surface or positioned at different depths of the contaminated soil, whereas in the case of on-site and ex situ treatment, it can be mixed to the soil to be reclaimed.

In order to obtain a reduction in pollutants equal to at least 90% of the biodegradation process, magnesium ammonium phosphate is generally used in such quantities as to ensure a C/N/P ratio ranging from 100:5:1 to 300:10:1 wherein C represents the quantity of carbon present in the pollutants, N and P the nitrogen and phosphorous, respectively, necessary for the microbial growth.

In relation to the concentration of pollutants and that of N and P present in the soil, the possibility of using a mixture of magnesium ammonium phosphate and one or more fertilizers commonly used in agriculture, is evaluated. In order to favour an accurate distribution of the salt into the earth and the gradual and slow release of the nutritive elements, it is preferable to irrigate the soil to be treated with water either coming from a reservoir or wells with the use of pumps driven by the windmill itself.

Once the venting heads have been installed, the nutrient salt distributed and the windmill activated, the remediation process, object of the present invention, can be monitored with sensors and/or probes which continuously measure the trend of the concentration of the hydrocarbons present in the interstitial gases of the soil and/or in the water table. These sensors are previously inserted into the ground and are capable of determining the presence of hydrocarbons even at extremely low concentrations. Examples of these sensors are described in Italian patent 1,290,063.

There are numerous useful parameters which can be measured with commercial sensors or probes, for example, the pH, redox potential, temperature of the soil or ground water, concentration of oxygen and carbon dioxide in the interstitial gases in the soil.

The concentration data revealed by the sensors/probes can be transmitted to a data processing unit in a remote position with respect to the site to be remediated and processed for running and regulating the aeration process of the soil and distribution of the irrigation water. In particular, this operating system requires at least one local and one remote station.

The local station is capable of receiving a signal from the remote station which allows some of the operating parameters to be varied, such as increases or decreases in the flow-rates of the fluids (air and water). These variations can become operative for example by the use of servo-mechanisms, electrovalves or actuators.

Some illustrative but non-limiting examples are provided for a better understanding of the present invention and for its embodiment.

### EXAMPLE 1

The present example describes the embodiment of a bio-sparging/bioventing plant in situ, according to the procedure of the present invention.

The site to be remediated had been previously used as a sales point for fuels. The characterization of the soil indicated a contamination of the area relating to underground reservoirs (about 10 x 10 m) at a depth of 5 m from the surface of the ground. The concentration of total hydrocarbons ranged from a few tens to a few hundreds of mg_{TPH}/ kgₛₒᵢₗ.

The water table lies at a depth of 2.5 m. The concentration of hydrocarbons in the water ranged from 200 to 700 ppb.

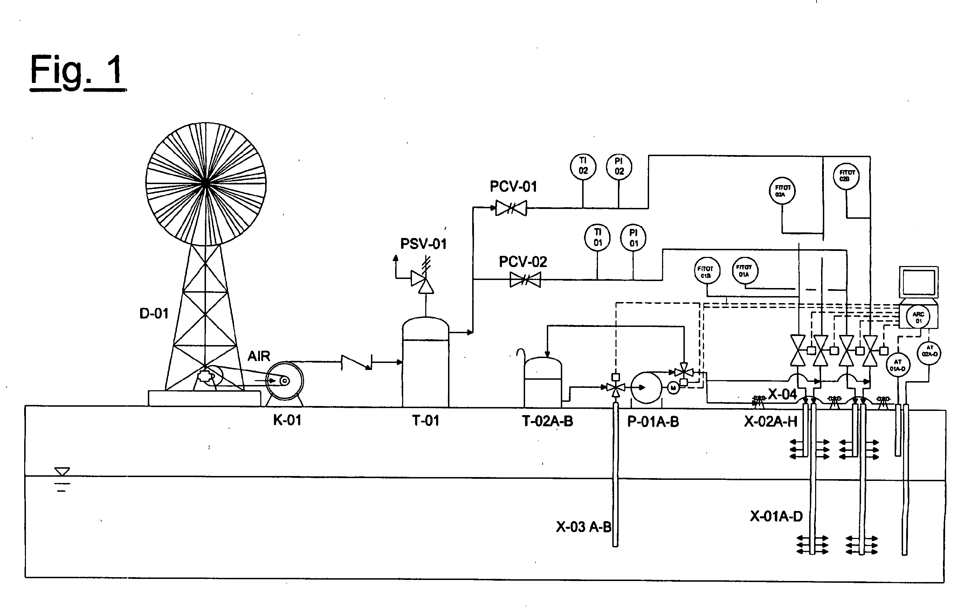

A general plant scheme is shown in Figure 1 which, for the sake of simplicity, indicates only two injection points, X-O1 and X-02 respectively, instead of those effectively existing, in a higher number.

The windmill D-01 allows the wind energy to be converted into mechanical energy. This is a machine which, for a wind velocity of 5 m/s, develops a power equal to 0.6 kW. The windmill has an impeller with a diameter of 6 metres and is housed in a trellis, 12 metres high, anchored to the ground by means of concrete plinths. This equipment is directly coupled, after a multiplication of revs, to the alternative oil-free compressor K-01.

The compressed air is pumped into the reservoir T-01, having a capacity of 5 m³, and is sent into two main lines consisting, in addition to a series of measuring instruments (T and P) and safety systems, of a pressure reducer which allows the desired flow-rate of air to be obtained at the outlet at a pressure which is sufficient to exceed that at the head which rests on the injection points, and also the pressure drops of the line itself.

From the main lines, the air flow is divided among the various consumption points (X-01 and X-02) through flexible rapid-connection_couplings. For the remediation of an area of about 10 m x 10 m, 4 air injection points were produced up to a depth of 5.5 m (saturated zone) with a pitch equal to 5 m. A hole of 120 mm was created for each point, in which 3 air injection points with 1" tubes were inserted at different depths.

The automatic monitoring procedures in the operating phase of the physico-chemical parameters differ between saturated and unsaturated soil. In the former case the following parameters were monitored:
- hydrocarbon trend by means of resistive sensors lined with membranes impermeable to water and permeable to vapours and gases;
- oxygen dissolved in ground water by means of a specific probe also capable of determining the conductivity, redox potential, pH and temperature.

In the unsaturated soil portion, the following parameters were analyzed by means of special underground sensors:
- hydrocarbon trend by means of resistive sensors lined with membranes impermeable to water and permeable to vapours and gases;
- the oxygen of the interstitial gases;
- the humidity of the ground.

With the process data collection and processing system (hydrocarbons, oxygen in the ground water and interstitial gases, humidity of the ground) ARC-01, it was possible to act on the automatic valves inserted in the air and water distribution lines, in order to modulate the flow-rates of the relative streams for each line. The air flow-rates of the single consumption points were measured by means of FITOT-01 and FITOT-02 instruments.

The operating air flow-rates adopted had sufficiently limited values as to prevent the formation of clogging phenomena and minimize the possible desorption action of the volatile pollutants and their conveyance in gaseous phase.

With respect to the gradual release of nutrient substances, magnesium ammonium phosphate was interred in various points of the saturated ground, by effecting four drillings up to 5.5 m and the portion of the hole from 2.5 to 5.5 m was filled with magnesium ammonium phosphate hexahydrate whereas the portion from 0 to 2.5 m was filled with soil deriving from the drilling action itself.

For the unsaturated part, on the other hand, as it was not possible to exploit the dispersion and diffusion phenomena in the water table, the periodic irrigation of the surface of the treatment area was effected, thus entrusting the subsequent water percolation with the task of transporting the salt initially dispersed in the uppermost surface layer of the ground.

The dosage system of the water consisted of the reservoirs T-02 A-B that feed the feeding pipe of one of the pumps P-01 A-B which use compressed air as engine fluid and feed the surface irrigation system X-04. The supply is ensured by the suction of ground water with one of the pumps P-01 A-B from suitable wells (X-03 A-B) situated inside the treatment area or surrounding areas. The irrigation system consisted of 4 sprinklers having an influence radius of 3 m.

With the sole purpose of validating the approach of the present process, for the first 70 days following the activation of the plant, samplings of soil and water were taken. After a latency period of about 30 days, the initial degradation of the hydrocarbons present in the unsaturated zone, was observed, which after 70 days had diminished by 35%.

During the intervention, the monitoring/data collection and processing system provided the following indications:
- the trend of the hydrocarbons proved to decrease with time in correspondence with what had been observed with the direct analysis of the ground samples used for the validation;
- the oxygen dissolved in the water of the piezometres inside the treatment area oscillated between 2 and 3 mg/l;
- the nitrogenated sources measured in the water of the piezometres inside the treatment area proved to have increased by 1.0 mg/l, thus confirming the slow release of the nutrients used;
- analogous measurements in the water of the piezometres outside the treatment area showed no significant shifts with respect to the values obtained before the activation of the remediation plant;
- the irrigation system was automatically activated twice.

### EXAMPLE 2

A bio-cell was produced for the treatment of 14 m³ of soil contaminated by hydrocarbons (total TPH equal to 22,000 ppm) characterized by a low content of inorganic nutrients (ammonium 0.6 ppm, nitrate 0 ppm, phosphate 1.7 ppm) necessary for the development of a microbial flora.

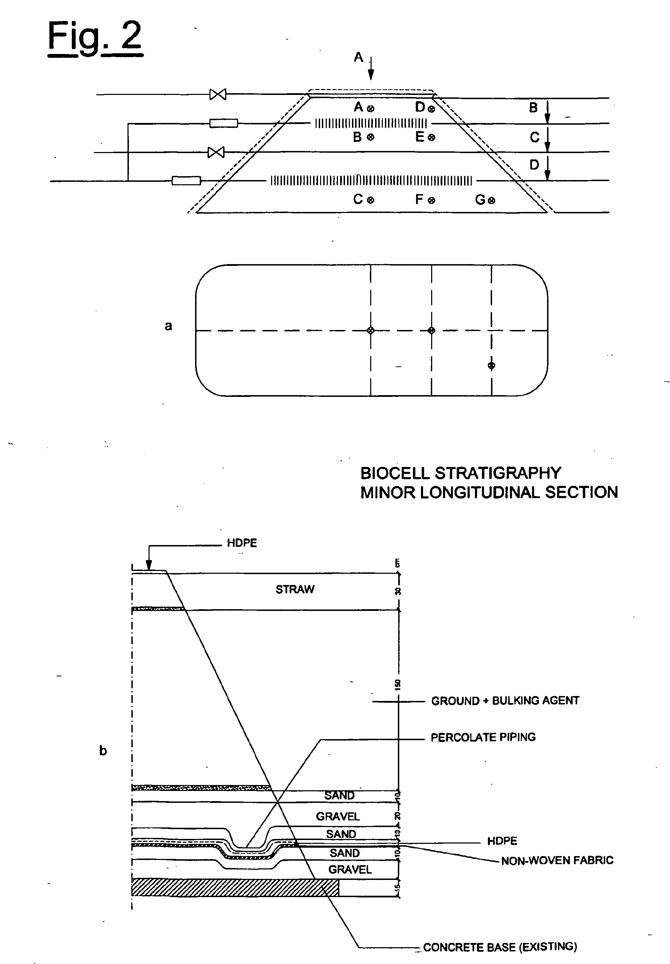

Figure 2 show views of the plant and the longitudinal section of the bio-cell for whose preparation, on a concrete base coated with a sheet of HDPE, a layer of gravel of an area equal to 5 x 4 m and a thickness of 15 cm, and a layer of sand with a thickness of about 10 cm, were arranged in succession.

A sheet of non-woven fabric was deposited on this material. It was covered with a layer of sand and a layer of gravel, in which the collection pipes of the percolated product were housed. A layer of sand and a sheet of non-woven fabric were then superimposed.

Eight 1" pipes were arranged vertically to house the sensors for hydrocarbons, oxygen and humidity (letters a÷g of the longitudinal section).

About 40 cm of contaminated soil, previously amended with 20% by volume of bog moss peat and with 200 Kg of magnesium ammonium phosphate hexahydrate, were stratified.

A first row of 4 pipes were installed, for the air injection, consisting of fissured PVC pipes enveloped in sleeves of non-woven fabric (on the level of the "Δ" plane of figure 2). A further 40 cm of amended and fertilized soil were stratified, so as to create a truncated pyramid mound on which the first row of 4 water injection pipes were installed, consisting of a fissured PVC pipe enveloped by a sleeve of non-woven fabric (plane "C").

The operations of soil stratification, installation of 2 air pipes (plane "B"), soil stratification and installation of 2 water pipes (plane "A"), were repeated.

The probes for monitoring the interstitial gases (O₂, CO₂ and VOC), pH, redox potential, temperature and ground humidity, were inserted in the 8 specific lodgings: they were connected to the data acquisition and control system of the actuators for the inlet of air and water.

The whole visible surface was covered, in succession, with a sheet of non-woven fabric, 30 cm of straw and a sheet of HDPE.

The air pipes were connected to two collectors and these to the 5 m³ reservoir, fed by the windmill with characteristics analogous to those specified in Example 1.

The air flow at the outlet of the reservoir had a maximum pressure of a few metres of water column, sufficient to overcome the pressure drops of the line and section of the ground crossed. This flow was distributed among the collectors and subsequently among the various consumption points according to flow-rates established by the control system with characteristics analogous to what is described in Example 1.

The percolate was collected, through gravitational drop, in a 2 m³ underground reservoir. A pump allowed the water to be re-conveyed to the relative distribution system.

The water which was progressively evaporated was reintegrated by means of the periodic addition of tap or well water.

The remediation was initiated by opening the air and water inlet valves. The air flow-rate at 6 points was regulated to a value ranging from 2.4 to 3.6 Nm³/h whereas the maximum water flow-rate proved to be equal to 550 litres/day (400 in the 4 pipes of level "C" and 150 in the 2 pipes of level "A").

The probes for monitoring the interstitial gases indicated the concentration of VOC (Volatile Organic Compounds), O₂ and CO₂.

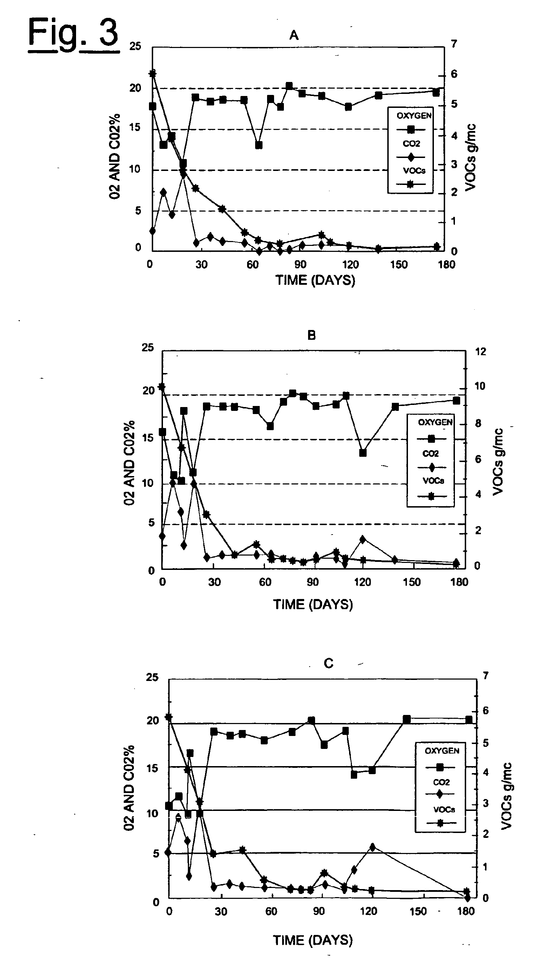

A typical example of the measurements obtained is shown in the graphs of Figure 3, registered by means of the data acquisition system and transmitted via modem in real time. The graphs indicate the composition of the interstitial gases in the monitoring points A, B and C of Figure 2.

The remaining values (T, redox and pH) were also recorded in this system.

The continuous running of the plant was prolonged for about 170 days and from observing the graphs mentioned above, it can be deduced that:
- in the first 30 days an intense microbial activity was observed, registered by a very distinct oscillation of the O₂ and CO₂ values; contemporaneously the values registered of the VOC in the interstitial gases showed a clear reduction;
- a second phase, in which a more regular respiration was recorded, as a consequence of a stabilization of the process.

The pH remained constant within the range of 6-8, without any particular problems.

The redox potential rapidly reached and was subsequently maintained at values higher than 250 mV, indicating favourable conditions for the growth of aerobic microbial flora.

With the sole purpose of validating the approach of the present process, a sample of soil was taken every 40 days to analyze the residual concentration of TPH and microbial growth of the oxidizing hydrocarbon autochthon flora: the results are indicated in the table.

**Table**

| Days | TPH (ppm) | Oxidizing hydrocarbon (CFU/g) |
|---|---|---|
| 0 | 22,000 on the product as such | 1x10⁵ |
| | 20,600 on the amended product | |
| 40 | 10,130 | 1x10⁵ |
| 80 | 6,840 | 3x10⁶ |
| 120 | 3,800 | 3x10⁶ |
| 160 | 3,400 | 3x10⁶ |

| | | |
|---|---|---|
| TPH = Total Petroleum Hydrocarbon CFU = Colony Forming Units | | |

## Claims

1. A process for the remediation of sites, such as soil, ground and underground water polluted by biodegradable organic products which comprises:
a) insertion in the site of a series of venting heads at different depths;
b) connection of the venting heads to a reservoir containing air under pressure, fed by a compressor driven by a windmill;
c) distribution of magnesium ammonium phosphate NH₄MgPO₄ in the site, in a single operation, at the beginning of the treatment, in such a quantity as to guarantee the availability of the amount of nitrogen and phosphorous necessary for the biodegradation process;
d) installation on site of a series of sensors for monitoring the progress of the biodegradation and for controlling the availability of oxygen and humidity;
e) connecting the sensors of step d) to data loggers, which, when periodically checked, transmit the acquired data to a collecting and data processing remote station;
f) regulating the flow-rate of the process fluids and the operating times of the equipment by means of actuators operated from the remote station.

2. The process according to claim 1, wherein the remediation is applied both in the case of treatment in situ, such as biosparging or bioventing, and in the case of on-site and ex situ treatment such as bio-cells and landfarming.

3. The process according to claim 1 or 2, wherein the remediation is effected in situ and the venting heads are positioned above or inside the water table.

4. The process according to claim 1 or 2, wherein the remediation is effected on-site and ex situ and the venting heads are arranged inside the matrix to be remediated.

5. The process according to any of the previous claims, wherein, in order to obtain a reduction in the pollutants equal to at least 90% of the biodegradation process, magnesium ammonium phosphate is used in such quantities as to ensure a C/N/P ratio ranging from 100:5:1 to 300:10:1 wherein C represents the quantity of carbon present in the pollutants, N and P respectively, the nitrogen and phosphorous necessary for the microbial growth.

6. The process according to any of the previous claims, wherein, in order to favour the accurate distribution in the ground and gradual and slow release of magnesium ammonium phosphate, it is preferable to irrigate the soil to be treated with water coming either from a reservoir or from wells with the use of pumps activated by the same windmill.

## Patentansprüche

1. Ein Verfahren zur Sanierung von Standorten wie z.B. Erde, Boden und Grundwasser, weiche durch biologisch abbaubare organische Produkte verschmutzt sind, welches umfasst:
a) Einbringung in den Standort einer Reihe von Belüftungsköpfen in unterschiedlichen Tiefen;
b) Verbindung der Belüftungsköpfe mit einem Reservoir, das Luft unter Druck enthält, welche von einem Kompressor, der von einer Windmühle angetrieben wird, zugeführt wird;
c) Verteilung von Magnesiumammoniumphosphat NH₄MgPO₄ in dem Standort in einem einzigen Arbeitsschritt zu Beginn der Behandlung in einer solchen Menge, dass die Verfügbarkeit der Menge an Stickstoff und Phosphor, die für den biologischen Abbauprozess nötig ist, garantiert wird;
d) Installation an dem Standort einer Reihe von Sensoren zum Überwachen des Fortschritts des biologischen Abbaus und zum Kontrollieren der Verfügbarkeit von Sauerstoff und Feuchtigkeit;
e) Verbinden der Sensoren von Schritt d) mit Datenregistriereinrichtungen, welche, wenn sie periodisch überprüft werden, die gewonnenen Daten zu einer entfernten Sammel- und Datenverarbeitungsstation übertragen;
f) Regulieren der Fließgeschwindigkeit der Prozessfluids und der Betriebszeiten der Ausrüstung mithilfe von Auslösern, welche von der entfernten Station aus betrieben werden,

2. Das Verfahren gemäß Anspruch 1, wobei die Sanierung sowohl in dem Fall der Behandlung in situ, wie z.B. Biosparging oder Bioventing, als auch in dem Fall einer Behandlung arn Standort ex situ, wie z.B. Bio-cells und Landfarming, angewendet wird.

3. Das Verfahren gemäß Anspruch 1 oder 2, wobei die Sanierung in situ bewirkt wird und die Belüftungsköpfe über oder unter dem Grundwasserspiegel angeordnet werden.

4. Das Verfahren gemäß Anspruch 1 oder 2. wobei die Sanierung an dem Standort und ex situ bewirkt wird und die Belüftungsköpfe innerhalb der zu sanierenden Matrix angeordnet werden.

5. Das Verfahren gemäß irgendeinem der vorhergehenden Ansprüche, wobei, um eine Verringerung der verschmutzende Stoffe, die wenigstens 90% entspricht, in dem biologischen Abbauprozess zu erhalten, Magnesiumammoniumphosphat in solchen Mengen verwendet wird, dass ein c/N/P-Verhältnis, das von 100:5:1 bis 300:10:1 reicht, worin C für die Menge an Kohlenstoff steht, der in den verschmutzenden Stoffen vorliegt, N bzw. P der Stickstoff und Phosphor sind, die für das mikrobielle Wachstum nötig sind, sichergestellt wird.

6. Das Verfahren gemäß irgendeinem der vorhergehenden Ansprüche, wobei es, um die genaue Verteilung im Grund und die schrittweise und langsarne Freisetzung von Magnesiumammoniumphosphat zu begünstigen, bevorzugt ist, die zu behandelnde Erde mit Wasser, das entweder aus einem Reservoir oder aus Bohrlöchern kämmt, unter Verwendung von Pumpen, welche durch dieselbe Windmühle aktiviert werden, zu bewässern.

## Revendications

1. Procédé pour l'assainissement de sites, tels que des sols, des eaux de surface ou souterraines pollués par des produits organiques biodégradables, qui comprend les étapes consistant à :
a) insérer dans le site une série de bouches de ventilation à différentes profondeurs ;
b) relier les bouches de ventilation à un réservoir contenant de l'air sous pression, alimenté par un compresseur entraîné par une éolienne ;
c) répartir du phosphate ammoniaco-magnésien NH₄MgPO₄ sur le site, en une seule opération, au début du traitement, en quantité suffisante pour garantir la disponibilité de la quantité d'azote et de phosphore nécessaires au processus de biodégradation ;
d) installer sur le site une série de capteurs pour surveiller la progression de la biodégradation et pour contrôler la disponibilité d'oxygène et d'humidité.
e) relier les capteurs du point d) à des enregistreurs de données, qui, lors de vérifications régulières, transmettent les données recueillies vers une station éloignée qui collecte et traite les données ;
f) réguler le débit des fluides à traiter et les temps de fonctionnement des équipements au moyen d'actionneurs commandés à partir de la station éloignée.

2. Procédé selon la revendication 1, dans lequel l'assainissement est appliqué à la fois dans le cas d'un traitement *in situ*, comme le biobarbotage ou la bioventilation, et dans le cas d'un traitement sur site et *ex situ* comme le traitement biocellulaire et l'épandage contrôlé.

3. Procédé selon la revendication 1 ou 2, dans lequel l'assainissement est effectué *in situ* et les bouches de ventilation sont positionnées au-dessus ou dans la nappe phréatique.

4. Procédé selon la revendication 1 ou 2, dans lequel l'assainissement est effectué sur site et *ex situ* et les bouches de ventilation sont disposées dans la matrice devant être assainie.

5. Procédé selon l'une quelconque des revendications précédentes, dans lequel, afin d'obtenir une réduction des polluants équivalant à au moins 90 % du processus de biodégradation, du phosphate ammoniaco-magnésien est utilisé dans des quantités suffisantes pour assurer un rapport C/N/P allant de 100:5:1 à 300:10:1, où C représente la quantité de carbone présente dans les polluants, N et P respectivement l'azote et le phosphore nécessaires à la prolifération microbienne.

6. Procédé selon l'une quelconque des revendications précédentes, dans lequel, afin de favoriser une répartition correcte dans le sol et une émission lente et graduelle de phosphate ammoniaco-magnésien, il est préférable d'irriguer le sol à traiter avec de l'eau provenant soit d'un réservoir soit de puits grâce à l'utilisation de pompes actionnées par la même éolienne.
